(19) Europäisches Patentamt / European Patent Office / Office européen des brevets

(11) **EP 2 580 254 B1**

(12) **EUROPEAN PATENT SPECIFICATION**

(45) Date of publication and mention
of the grant of the patent:
**10.08.2016 Bulletin 2016/32**

(51) Int Cl.:
**C08F 26/02** $^{(2006.01)}$     **C08F 2/24** $^{(2006.01)}$
**C08F 265/06** $^{(2006.01)}$     **C09J 151/00** $^{(2006.01)}$

(21) Application number: **11792040.5**

(22) Date of filing: **10.06.2011**

(86) International application number:
**PCT/IB2011/052533**

(87) International publication number:
**WO 2011/154920 (15.12.2011 Gazette 2011/50)**

(54) **MULTISTAGE PREPARATION OF AQUEOUS POLYMER DISPERSIONS FOR PRODUCING COMPOSITE FILMS**

**MEHRSTUFIGE HERSTELLUNG WÄSSRIGER POLYMERDISPERSIONEN ZUR HERSTELLUNG VON VERBUNDFILMEN**

**PRÉPARATION EN PLUSIEURS ÉTAPES DE DISPERSIONS AQUEUSES DE POLYMÈRES POUR LA PRODUCTION DE FILMS COMPOSITES**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2010 EP 10165716**

(43) Date of publication of application:
**17.04.2013 Bulletin 2013/16**

(73) Proprietor: **BASF SE**
**67056 Ludwigshafen am Rhein (DE)**

(72) Inventors:
• **Wilms, Daniel**
**55232 Alzey (DE)**
• **Schumacher, Karl-Heinz**
**67433 Neustadt (DE)**
• **Groß, Michael**
**68161 Mannheim (DE)**
• **Langhauser, Georg**
**67152 Ruppertsberg (DE)**

(74) Representative: **BASF IP Association**
**BASF SE**
**ZRX-C6**
**67056 Ludwigshafen (DE)**

(56) References cited:
**EP-A1- 1 479 699     EP-A1- 1 780 250**
**EP-A1- 1 978 043     EP-A2- 0 338 486**
**CA-A1- 2 415 529     US-A- 4 325 856**

Remarks:
The file contains technical information submitted after the application was filed and not included in this specification

**Description**

Description

The invention relates to a process for preparing an aqueous polymer dispersion from ethylenically unsaturated, free-radically polymerizable monomers, where, in a first stage, a first polymer is prepared by free-radical emulsion polymerization. In a second stage, an aqueous polymer dispersion is prepared in the presence of the first polymer. The monomers of the first stage comprise monomers with acid groups. The polymerization of the first stage takes place at a relatively low pH and the acid groups of the first polymer are neutralized only during the polymerization of the second stage. The aqueous polymer dispersions can be used as adhesives for producing composite films.

There exists a high demand for inexpensive adhesives for composite film lamination with good performance properties, for flexible food packaging, for example. Adhesive systems based on organic solvents have been used, but, in order to reduce emissions of organic solvents, water-based additive systems are preferred. Particular significance is possessed by acrylate ester polymer dispersions, also known as acrylic latex. US 4 325 856, EP 0 338 486 and EP 1 479 699 disclose two steps polymerisation processes for the preparation of copolymer latexes. Adhesives based on acrylate ester are described in WO 98/23656 and in WO 00/50480, for example. Frequently, the peel strengths are still capable of being improved. Particularly in the case of acrylate ester polymer dispersions prepared by emulsion polymerization with use of emulsifiers, the peel strength may be adversely affected by the emulsifier necessarily present. It is known in principle to carry out emulsion polymerization substantially without emulsifiers as well, if protective colloids are used in place of the emulsifiers. Typical protective colloids are polymers which contain acid groups and which, when the acid groups are neutralized, are water-soluble at elevated pH levels. At elevated pH levels and at the typically elevated temperatures at which emulsion polymerizations are carried out, however, there may be unwanted side reactions in the form of hydrolyses of the acrylate esters. The byproducts that form to a small extent in such reactions may in turn adversely affect the peel strength of composite films. The object was to prepare aqueous polymer dispersions which can be used to produce composite films having very good instantaneous adhesion and very good heat stability.

It has been found that the object can be achieved by the preparation process elucidated in more detail below and by the polymer dispersions obtainable by said process. The invention provides a process for preparing an aqueous polymer dispersion,

- where initially in a first stage in aqueous medium a first polymer dispersed in water is prepared by free-radical emulsion polymerization, the first polymer being prepared from a first composition comprising ethylenically unsaturated, free-radically polymerizable monomers, and where
- subsequently in a second stage a polymer dispersion is prepared in aqueous medium and in the presence of the first polymer by free-radical emulsion polymerization of a second composition, which is different from the first composition and comprises ethylenically unsaturated, free-radically polymerizable monomers,
- where the monomers of the first stage comprise at least one monomer having at least one acid group, in an amount of at least 0.1 part by weight, based on the total amount of monomers of the first and second stages, and
- where the polymerization of the first stage takes place at a pH less than 5, preferably less than or equal to 4.5, and, during the polymerization of the second stage, the acid groups of the first polymer are neutralized to an extent such that the pH of the polymer dispersion at the end of the second stage is greater than 5, preferably greater than or equal to 5.5, a total of less than 0.5% by weight, based on solids content of the polymer dispersion or no emulsifier is used.

The process described encompasses the preparation of polyacrylate dispersions in particular for application in composite film lamination, by a specially adapted "one-pot" process which is based on the stabilization of emulsion polymers by protective colloids formed in situ, i.e., during the emulsion polymerization.

The principle of the process of the invention is based on the preferably seed-controlled formation of small polymer particles in aqueous dispersion in a first polymerization stage by free-radical polymerization of a first monomer composition comprising at least one ethylenically unsaturated monomer having at least one acid group (e.g., a mixture of alkyl (meth)acrylate and (meth)acrylic acid) and also subsequent neutralization, taking place in parallel in a second polymerization stage, and feeding of the principal monomers, such as, for example, of a mixture of ethyl acrylate, n-butyl acrylate, methyl methacrylate, and optionally styrene. Following neutralization, the particles formed in the first stage are able to pass into solution and, as protective colloids, are able to stabilize the polymer dispersion of the invention. At the beginning of the reaction of the first stage, the pH in the reaction vessel falls continually as a result of continuous addition of acid. As a result of this, the polymer particles formed in the first polymerization stage are undissolved. Only with increasing neutralization during the second polymerization stage (e.g., by addition of ammonia) do the polymer particles formed initially pass into solution and, accordingly, constitute protective colloids which are able to act as dispersion-stabilizing protective colloids in the emulsion polymerization that commences with addition of the principal monomers, since said polymer particles are composed preferably of apolar alkyl (meth)acrylate units and polar (meth)acrylic acid units.

The invention also provides aqueous polymer dispersions prepared by the process of the invention, the use of the aqueous polymer dispersions of the invention for producing composite films, composite films produced using an adhesive comprising an aqueous polymer dispersion of the invention, and a corresponding process for producing composite films.

The polymer dispersions prepared in accordance with the invention are obtainable by free-radical emulsion polymerization of ethylenically unsaturated compounds (monomers). The polymerization both of the first stage and of the second stage takes place preferably with no emulsifier or with little emulsifier in the sense that no emulsifier is added to stabilize the polymer dispersion of the invention. Emulsifiers are nonpolymeric, amphiphilic, surface-active substances that are added to the polymerization mixture. Small amounts of emulsifiers, present as a result, for example, of the use of emulsifier-stabilized polymer seed, are not detrimental. It is preferred that, in total, less than 1 % or less than 0.5% by weight of emulsifier is used, more particularly less than 0.3% by weight or less than 0.2% by weight, based on the solids content of the polymer dispersion, or no emulsifier.

In the first stage a polymer is prepared from monomers which comprise at least one monomer having at least one acid group, in an amount of at least 0.1 part by weight, preferably from 1 to 10 parts by weight, based on the total amount of monomers of the first and second stages. Preferably, in the first stage, monomers containing acid groups (acid monomers) are copolymerized with monomers without acid groups, more particularly nonionic monomers. The weight ratio of monomers containing acid groups to monomers without acid groups in the monomer mixture of the first polymerization stage is preferably in the range from 0.5:99.5 to 30:70, preferably from 1:99 to 20:80 or from 5:95 to 15:85.

At low pH levels of 2 to 3, for example, and with nonneutralized acid groups, the polymer of the first stage is not water-soluble, but is dispersed in water. If neutralizing agent is added during the polymerization of the second stage, there is a successive increase, with increasing degree of neutralization of the acid groups, in the water-solubility of the polymer of the first stage. With increasing water solubility, the polymer of the first stage is able increasingly to act as a protective colloid for the polymer of the second stage and, toward the end of the polymerization, is able to stabilize the polymer dispersion with high polymer solids content. Protective colloids are polymeric compounds which, on solvation, bind large amounts of water and are capable of stabilizing dispersions of water-insoluble polymers. In contrast to emulsifiers, they generally do not lower the interfacial tension between polymer particles and water. The number-average molecular weight of the protective colloids is preferably above 1000 g/mol, more particularly above 2000 g/mol, and preferably up to 50 000 g/mol or up to 10 000 g/mol. As for example from 1000 to 100 000 g/mol, from 1000 to 10 000 g/mol or from 2000 to 10 000 g/mol.

The polymers of the first stage that become effective as protective colloids on neutralization are used preferably in an amount of 1 % to 60% or of 5% to 50% by weight, or of 7% to 40% or of 10% to 30% by weight (particularly when the total solids content of the polymer dispersion of the invention is more than 50% by weight), based on 100% by weight of the monomers to be polymerized.

The acid groups of the polymer of the first stage may be neutralized partially or completely with suitable bases. It is preferred to use aqueous sodium hydroxide or potassium hydroxide solution, or ammonia, as neutralizing agent.

The acid monomers used in the first stage can be copolymerized with monomers without acid group. The polymer of the first stage is preferably formed from at least 40% by weight of nonionic principal monomers, defined in more detail below, and also from a second kind of monomer, selected from ethylenically unsaturated acid monomers. The polymer of the first stage may, furthermore, optionally be formed from further, preferably nonionic, monomers. The polymer of the first stage is preferably constructed of at least 40%, more particularly of 40% to 80% or of 50% to 80%, by weight of principal monomers which are selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers. Principal monomers for the polymer of the first stage are, for example, (meth)acrylic acid alkyl esters with a $C_1$-$C_{10}$ alkyl radical, such as methyl methacrylate, methyl acrylate, n-butyl acrylate, ethyl acrylate, and 2-ethylhexyl acrylate. Also suitable in particular are mixtures of the (meth)acrylic acid alkyl esters. Vinyl esters of carboxylic acids having 1 to 20 C atoms are, for example, vinyl laurate, vinyl stearate, vinyl propionate, Versatic acid vinyl esters, and vinyl acetate. Vinylaromatic compounds contemplated include vinyltoluene, alpha- and para-methylstyrene, alpha-butylstyrene, 4-n-butylstyrene, 4-n-decylstyrene, and, preferably, styrene. Examples of nitriles are acrylonitrile and methacrylonitrile. The vinyl halides are ethylenically unsaturated compounds substituted by chlorine, fluorine or bromine, preferably vinyl chloride and vinylidene chloride. Vinyl ethers include, for example, vinyl methyl ether and vinyl isobutyl ether. Vinyl ethers of alcohols comprising 1 to 4 C atoms are preferred. As hydrocarbons having 4 to 8 C atoms and two olefinic double bonds, mention may be made of butadiene, isoprene, and chloroprene. Preferred as principal monomers for the polymer of the first stage are the $C_1$ to $C_{10}$ alkyl acrylates and methacrylates, more particularly $C_1$ to $C_8$ alkyl acrylates and methacrylates. Ethyl acrylate is especially preferred.

The polymer of the first stage is further composed, preferably, of at least 5%, more particularly of 6% to 50% or of 7% to 25%, by weight of ethylenically unsaturated acid monomers. Ethylenically unsaturated acid monomers are, for example, ethylenically unsaturated carboxylic acids, ethylenically unsaturated sulfonic acids, and vinylphosphonic acid. Ethylenically unsaturated carboxylic acids used are preferably alpha,beta-monoethylenically unsaturated monocarboxylic and dicarboxylic acids having 3 to 6 C atoms in the molecule. Examples thereof are acrylic acid, methacrylic acid, itaconic acid, maleic acid, fumaric acid, crotonic acid, vinylacetic acid, and vinyllactic acid. Examples of suitable ethylenically unsaturated sulfonic acids include vinylsulfonic acid, styrenesulfonic acid, acrylamidomethylpropanesulfonic acid, sulfopropyl acrylate, and sulfopropyl methacrylate. Preference is given to acrylic acid and methacrylic acid and a mixture thereof, and acrylic acid is particularly preferred.

In one preferred embodiment the polymer of the first stage is a copolymer which

(i) in used in an amount of 5% to 40% by weight, based on 100 parts by weight of the total monomers to be polymerized in the first and second stages,
(ii) is composed of at least 50% and up to 95% by weight of principal monomers which are selected from the group consisting of C1 to C10 alkyl (meth)acrylates and mixtures of these monomers, especially ethyl acrylate, and
(iii) is composed of at least 5% and up to 30% by weight of ethylenically unsaturated acid monomers, which are preferably selected from acrylic acid, methacrylic acid, and a mixture thereof.

One embodiment of the invention uses at least one molecular weight regulator in the polymerization of the first stage. By means of such a regulator it is possible to reduce the molar mass of the emulsion polymer, by a chain termination reaction. The regulators are attached in the process to the polymer, generally to the chain end. The amount of regulators is in particular 0.05 to 4 parts by weight, more preferably 0.05 to 0.8 part by weight, and very preferably 0.1 to 0.6 part by weight, based on 100 parts by weight of the monomers to be polymerized. Examples of suitable regulators include compounds having a thiol group such as tert-butyl mercaptan, thioglycolic acid ethylacrylic ester, mercaptoethanol, mercaptopropyltrimethoxysilane or tert-dodecyl mercaptan. The regulators are generally low molecular weight compounds with a molar weight of less than 2000, more particularly less than 1000, g/mol.

In one preferred embodiment of the invention, the polymerization of the first stage takes place in the presence of seed latex. Seed latex is an aqueous dispersion of finely divided polymer particles having an average particle diameter of preferably 20 to 40 nm. Seed latex is used in an amount of preferably 0.05% to 5% by weight, more preferably of 0.1 % to 3% by weight, based on the total monomer amount of the first and second stages. A suitable latex, for example, is one based on polystyrene or based on polymethyl methacrylate. A preferred seed latex is polystyrene seed.

Preferably at least 60%, more preferably at least 80%, e.g., from 80% to 100%, more preferably at least 90% or 100%, by weight of the monomers used for the polymerization of the second stage comprise one or more of the principal monomers described below. The principal monomers are selected from the group consisting of $C_1$-$C_{20}$ alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms, and one or two double bonds, or mixtures of these monomers.

Examples include (meth)acrylic acid alkyl esters with a $C_1$-$C_{10}$ alkyl radical, such as methyl methacrylate, methyl acrylate, n-butyl acrylate, ethyl acrylate, and 2-ethylhexyl acrylate. Also suitable in particular are mixtures of the (meth)acrylic acid alkyl esters. Vinyl esters of carboxylic acids having 1 to 20 C atoms are, for example, vinyl laurate, vinyl stearate, vinyl propionate, Versatic acid vinyl esters, and vinyl acetate. Vinylaromatic compounds contemplated include vinyltoluene, alpha- and para-methylstyrene, alpha-butylstyrene, 4-n-butylstyrene, 4-n-decylstyrene, and, preferably, styrene. Examples of nitriles are acrylonitrile and methacrylonitrile. The vinyl halides are ethylenically unsaturated compounds substituted by chlorine, fluorine or bromine, preferably vinyl chloride and vinylidene chloride. Vinyl ethers include, for example, vinyl methyl ether and vinyl isobutyl ether. Vinyl ethers of alcohols comprising 1 to 4 C atoms are preferred. As hydrocarbons having 4 to 8 C atoms and two olefinic double bonds, mention may be made of butadiene, isoprene, and chloroprene.

Preferred as principal monomers for the polymerization of the second stage are the $C_1$ to $C_{10}$ alkyl acrylates and methacrylates, more particularly $C_1$ to $C_8$ alkyl acrylates and methacrylates, and vinylaromatics, especially styrene, and mixtures thereof. Very particular preference is given to methyl acrylate, methyl methacrylate, ethyl acrylate, n-butyl acrylate, n-butyl methacrylate, n-hexyl acrylate, octyl acrylate, and 2-ethylhexyl acrylate, 2-propylheptyl acrylate, styrene, and mixtures of these monomers.

Besides the principal monomers, the monomers for the polymerization of the second stage may comprise further monomers, examples being monomers with carboxylic acid, sulfonic acid or phosphonic acid groups. Carboxylic acid groups are preferred. Examples include acrylic acid, methacrylic acid, itaconic acid, maleic acid, and fumaric acid. Further monomers are also, for example, monomers comprising hydroxyl groups, especially $C_1$-$C_{10}$ hydroxyalkyl (meth)acrylates, and also (meth)acrylamide. Further monomers that may be mentioned are, moreover, phenyloxyethylglycol mono(meth)acrylate, glycidyl acrylate, glycidyl methacrylate, and amino (meth)acrylates such as 2-aminoethyl (meth)acrylate. Crosslinking monomers are further monomers that may also be mentioned. The monomers used in the second stage preferably comprise less than 1 % by weight or no monomers with acid groups.

In particular, the monomers for the polymerization of the second stage are selected to an extent of at least 60%, more preferably at least 80%, e.g., from 60% to 100%, and very preferably at least 95% or 100%, by weight, of at least one $C_1$ to $C_{20}$ alkyl acrylate, at least one $C_1$ to $C_{20}$ alkyl methacrylate, a mixture thereof, or a mixture thereof with styrene.

In one embodiment, the monomer with at least one acid group that is used in the first stage is acrylic acid; the monomer without an acid group that is used in the first stage is ethyl acrylate; and at least 80% by weight of the monomers used in the second stage are selected from the group consisting of C1 to C10 alkyl acrylates, C1 to C10 alkyl methacrylates, styrene, and a mixture thereof.

The monomers of the polymerization in the second stage are preferably selected such that the glass transition temperature, calculated for a polymer prepared from the monomers of the second stage, is in the range from -19°C to +15°C, more particularly from -15°C to +10°C. By a controlled variation of the nature and amount of the monomers it is possible in accordance with the invention for the skilled person to prepare aqueous polymer compositions whose polymers have a glass transition temperature within the desired range. Guidance is possible by means of the Fox equation. According to Fox (T.G. Fox, Bull. Am. Phys. Soc. 1956 [Ser. II] 1, page 123, and in accordance with Ullmann's Encyclopädie der technischen Chemie, Volume 19, page 18, 4th Edition, Verlag Chemie, Weinheim, 1980), the calculation of the glass transition temperature of copolymers is subject in good approximation to the following equation:

$$1/T_g = x^1/T_g^1 + x^2/T_g^2 + \dots x^n/T_g^n,$$

where $x^1$, $x^2$, .... $x^n$ are the mass fractions of the monomers 1, 2, .... n and $T_g^1$, $T_g^2$, .... $T_g^n$ are the glass transition temperatures of the polymers synthesized in each case only from one of the monomers 1, 2, .... n, in degrees Kelvin. The $T_g$ values for the homopolymers of the majority of monomers are known and are listed in Ullmann's Encyclopedia of Industrial Chemistry, Vol. A21, page 169, 5th Edition, VCH Weinheim, 1992; other sources of glass transition temperatures of homopolymers include, for example, J. Brandrup, E.H. Immergut, Polymer Handbook, 1st Edition, J. Wiley, New York 1966, 2nd Edition, J. Wiley, New York 1975, and 3rd Edition, J. Wiley, New York 1989. For ethyl acrylate a figure of -13°C is used.

The actual glass transition temperature of the polymer in the polymer dispersion of the invention (first and second stages) is preferably in the range from -15°C to +15°C. The actual glass transition temperature may be determined by means of differential scanning calorimetry (ASTM D 3418-08, midpoint temperature).

The weight ratio of the amount of the monomers used in the first stage to the amount of the monomers used in the second stage is preferably from 5:95 to 50:50 or from 5:95 to 40:60, more preferably from 10:90 to 30:70.

The polymer dispersion of the invention is prepared by emulsion polymerization. In the emulsion polymerization, ethylenically unsaturated compounds (monomers) are polymerized in water, with the use typically of ionic and/or nonionic emulsifiers and/or protective colloids or stabilizers as interface-active compounds for stabilizing the monomer droplets and the polymer particles subsequently formed from the monomers. In accordance with the invention, however, both the polymerization of the first stage and the polymerization of the second stage take place wholly or virtually without emulsifier. For the stabilization of the polymer dispersion formed in the polymerization of the second stage, the polymer of the first stage is used, which is converted in situ, by addition of neutralizing agent, from a water-insoluble polymer which is not active as a protective colloid, into a water-soluble polymer which is active as a protective colloid.

The neutralization of acid groups of the first polymer takes place preferably by feed addition of a neutralizing agent during the polymerization of the second stage, the feed of neutralizing agent taking place preferably in parallel with the monomer feed. The neutralizing agent may be added in a joint feed with the monomers to be polymerized, or in a separate feed. After all of the monomers have been fed in, the amount of neutralizing agent present in the polymerization vessel is preferably the amount needed to neutralize at least 10%, preferably 30% to 100% or 30% to 90%, of acid equivalents.

The emulsion polymerization of the first and second stages may be started using water-soluble initiators. Water-soluble initiators are, for example, ammonium salts and alkali metal salts of peroxodisulfuric acid, e.g., sodium peroxodisulfate, hydrogen peroxide, or organic peroxides, e.g., tert-butyl hydroperoxide. Also suitable as initiators are what are called reduction-oxidation (redox) initiator systems. The redox initiator systems are composed of at least one, usually inorganic, reducing agent and one organic or inorganic oxidizing agent. The oxidizing component comprises, for example, the emulsion polymerization initiators already stated above. The reducing component comprises, for example, alkali metal salts of sulfurous acid, such as sodium sulfite, sodium hydrogen sulfite, alkali metal salts of disulfurous acid such as sodium disulfite, bisulfite addition compounds with aliphatic aldehydes and ketones, such as acetone bisulfite, or reducing agents such as hydromethanesulfinic acid and its salts, or ascorbic acid. The redox initiator systems may be used in conjunction with soluble metal compounds whose metallic component is able to occur in a plurality of valence states. Typical redox initiator systems are, for example, ascorbic acid/iron(II) sulfate/sodium peroxydisulfate, tert-butyl hydroperoxide/sodium disulfite, and tert-butyl hydroperoxide/Na hydroxymethanesulfinic acid. The individual components, the reducing component for example, may also be mixtures, an example being a mixture of the sodium salt of hydroxymethanesulfinic acid with sodium disulfite.

The stated initiators are used mostly in the form of aqueous solutions, with the lower concentration being determined by the amount of water that is acceptable in the dispersion, and the upper concentration by the solubility of the respective compound in water. Generally speaking, the concentration of the initiators is 0.1 % to 30%, preferably 0.5% to 20%, more preferably 1.0% to 10%, by weight, based on the monomers to be polymerized. It is also possible for two or more different initiators to be used in the emulsion polymerization.

The molecular weight regulators stated above may be used in the polymerization of the second stage. Preferably, however, the polymerization of the second stage takes place without addition of further molecular weight regulators.

The emulsion polymerization takes place in general at 30 to 130°C, preferably at 50 to 90°C. the polymerization medium may be composed of water alone, or of mixtures of water and water-miscible liquids such as methanol. It is preferred to use just water. The emulsion polymerization of the first stage may be carried out either as a batch operation or in the form of a feed process, including staged or gradient procedures. For more effective setting of the particle size it is preferred, in the polymerization, to include a polymer seed in the initial charge.

The way in which the initiator is added to the polymerization vessel in the course of the free-radical aqueous emulsion polymerization is known to a person of ordinary skill in the art. It may be included in its entirety in the initial charge to the polymerization vessel, or introduced, continuously or in stages, at the rate at which it is consumed in the course of the free-radical aqueous emulsion polymerization. In each individual case, this will depend on the chemical nature of the initiator system and on the polymerization temperature. It is preferred to include a portion in the initial charge and to supply the remainder to the polymerization zone at the rate of its consumption. For the purpose of removing the residual monomers, it is customary to add initiator after the end of the actual emulsion polymerization as well, i.e., after a monomer conversion of at least 95%. The individual components may be added to the reactor, in the case of the feed process, from above, in the side or from below, through the reactor bottom.

The emulsion polymerization produces aqueous polymer dispersions having solids contents generally of 15% to 75%, preferably of 40% to 75%, and more preferably of greater than or equal to 50%, by weight. For a high space/time yield of the reactor, dispersions with a very high solids content are preferred. In order to be able to attain solids contents > 60% by weight, a bimodal or polymodal particle size ought to be set, since otherwise the viscosity becomes too high and the dispersion can no longer be handled. Producing a new generation of particles can be accomplished, for example, by adding seed (EP 81083), by adding excess amounts of emulsifier, or by adding miniemulsions. A further advantage associated with the low viscosity at high solids content is the improved coating behavior at high solids contents. Producing one or more new generations of particles can be done at any desired point in time. This point in time is guided by the particle size distribution that is aimed at for a low viscosity.

The polymer prepared in this way is used preferably in the form of its aqueous dispersion. The size distribution of the dispersion particles may be monomodal, bimodal or multimodal. In the case of monomodal particle size distribution, the average particle size of the polymer particles dispersed in the aqueous dispersion is preferably less than 400 nm, more particularly less than 200 nm. By average particle size here is meant the $d_{50}$ of the particle size distribution, i.e., 50% by weight of the total mass of all the particles have a particle diameter smaller than the $d_{50}$. The particle size distribution can be determined in a known way using the analytical ultracentrifuge (W. Mächtle, Makromolekulare Chemie 185 (1984), pages 1025 - 1039). In the case of bimodal or multimodal particle size distribution, the particle size may be up to 1000 nm. The pH of the polymer distribution is set preferably to a pH of more than 5, more particularly to a pH between 5.5 and 8.

The polymer dispersions of the invention are used in accordance with the invention in aqueous adhesive preparations for the production of laminates, i.e., in aqueous laminating adhesive preparations for the bonding of substrates of large surface areas, more particularly for the production of composite films.

The present invention hence also provides a process for producing composite films by using an aqueous adhesive preparation which comprises at least one polymer dispersion of the invention. In this process, the aqueous polymer dispersions may be used as they are or after formulation with typical auxiliaries. Examples of typical auxiliaries include wetting agents, thickeners, other protective colloids, light stabilizers, biocides, defoamers, etc. The adhesive preparations of the invention do not require the addition of plasticizing resins (tackifiers) or other plasticizers. In the process for producing composite films, at least two films are bonded with one another using the aqueous polymer dispersion.

In the process of the invention for producing composite films, the polymer dispersion of the invention, or an appropriately formulated preparation, is applied to the large-surface-area substrates to be bonded, preferably with a layer thickness of 0.1 to 20 g/m$^2$, more preferably 1 to 7 g/m$^2$, by means, for example, of knife coating, spreading, etc. Typical coating techniques may be employed, examples being roller coating, reverse roller coating, gravure roller coating, reverse gravure roller coating, brush coating, rod coating, spray coating, air brush coating, meniscus coating, curtain coating or dip coating. After a short time for the water of the dispersion to evaporate (preferably after 1 to 60 seconds), the coated substrate may then be laminated with a second substrate, the temperature being able, for example, to be 20 to 200°C, preferably 20 to 100°C, and the pressure being able to be, for example, 100 to 3000 kN/m$^2$, preferably 300 to 2000 kN/m$^2$.

The polymer dispersion of the invention is employed preferably as a one-component composition, i.e., without additional crosslinking agents, more particularly without isocyanate crosslinkers. However, the polymer dispersion of the invention can also be used as a two-component adhesive, where a crosslinking component is added, such as a water-emulsifiable isocyanate, for example. At least one of the films may be metalized or printed on the side that is coated with adhesive. Examples of suitable substrates include polymer films, more particularly of polyethylene (PE), oriented polypropylene (OPP), unoriented polypropylene (CPP), polyamide (PA), polyethylene terephthalate (PET), polyacetate, cellophane, polymer films (vapor-)coated with metal, e.g., with aluminum (metalized films for short) or metal foils, of aluminum, for example. The stated films and foils may be bonded with one another or with a foil or film of a different type - for example, polymer films with metal foils, different polymer films with one another, etc. The stated foils and films may also, for example, be printed with printing inks.

One embodiment of the invention is a composite film produced using one of the aqueous polymer dispersions of the invention as described above, the material of a first film being selected from OPP, CPP, PE, PET, and PA, and the material of a second film being selected from OPP, CPP, PE, PET, PA, and metal foil. In one embodiment of the invention, the first film and/or the second film is metalized or printed on the respective side coated with the polymer dispersion of the invention. The thickness of the substrate films may be, for example, from 5 to 100 $\mu$m, preferably from 5 to 40 $\mu$m.

Surface treatment of the film substrates prior to coating with a polymer dispersion of the invention is not absolutely necessary. Better results, however, may be obtained if the surface of the film substrates is modified prior to coating. In this case it is possible to employ typical surface treatments, an example being corona treatment, for the purpose of intensifying the adhesion effect. The corona treatment or other surface treatments are carried out to the extent required for sufficient wettability with the coating composition. Typically, corona treatment of approximately 10 watts per square meter per minute is sufficient for this purpose. Alternatively or additionally it is also possible, optionally, to use primers or tie coats between film substrate and adhesive coating. Furthermore, other, additional functional layers may be present on the composite films, examples being barrier layers, print layers, color layers or varnish layers, or protective layers. These functional layers may be located externally, i.e., on the side of the film substrate facing away from the adhesive-coated side, or internally, between film substrate and adhesive layer.

It is an advantage of the invention that a wide variety of different substrates can be bonded with one another, i.e., laminated, with the polymer dispersions of the invention ensuring effective adhesion of the adhesive preparation to the substrates and producing a high strength in the bonded assembly. Moreover, the polymer dispersions of the invention are notable for good instantaneous adhesion and good heat stability.

Particular advantages of the preparation process of the invention and of the products of the invention are the following in particular:

- improved peel strengths as compared with conventionally prepared polymer dispersions for composite film lamination, particularly immediately after laminating (instantaneous strength) and at the same time at elevated temperatures (heat stability)
- virtually emulsifier-free operation is possible (small amounts of emulsifier when using an emulsifier-stabilized polymer seed are not detrimental)
- simplicity of the process (no need for metered addition of initiator)
- substantial avoidance of hydrolysis of acrylate monomers, owing to the comparatively low pH level, as compared with conventionally prepared acrylate polymer dispersions
- cost saving by comparison with other protective colloid-stabilized polymer dispersions, since, because of the in situ preparation of the protective colloid, there is no need for separate synthesis, transport, and storage of the protective colloid
- extensive variability of the process in respect of the composition of the protective colloid that can be used (polymer of the first stage) and of the overall composition of the polymer dispersion.

Examples

A 4 l vessel with anchor stirrer, heated to 80°C, is charged with 9 g of polystyrene seed dispersion (concentration: 33%, particle size = 30 nm) and 770 g of fully demineralized water. Then 71 g of sodium peroxodisulfate solution (7% strength in water) are added and the mixture is stirred at 80°C for 2 minutes. This is followed by the addition over 40 minutes of a mixture of 175 g of ethyl acrylate, 25 g of methacrylic acid and 3,5 g of 2-ethylhexyl thioglycolate. After polymerization of the first polymerization stage for 20 minutes, the second polymerization stage is commenced, by commencement simultaneously of the principal monomer feed (600 g of ethyl acrylate, 80 g of n-butyl acrylate and 120 g of methyl methacrylate, 24 g of fully demineralized water; metering over 1.5 hours) and of the neutralizing feed (14 g of ammonia, 100 g of fully demineralized water; metering over 2.5 hours). Finally, polymerization is continued at 80°C for 2 hours, followed by cooling and filtering.

Polymer dispersions P1-P7

Polymer dispersions P1 to P7 are prepared similarly. In these cases, 17.5 parts by weight of ethyl acrylate and 2.5 parts by weight of acrylic acid are used in the first polymerization stage. In the second polymerization stage, the monomer compositions indicated in Table 1 are used. The quantity figures relate to parts by weight.

Comparative polymer dispersion P8-9

These are prepared in the same way as for P1-P7. In the second polymerization stage, the monomer compositions indicated in Table 1 are used.

Comparative polymer dispersion P10 (containing emulsifier)

Polymer dispersion P10 was prepared as described above and with the same monomers as polymer dispersion P2, with the difference that additionally 1.5 parts by weight of emulsifier (Maranil® A20; sodium n-C10-C30-alkylbenzenesulfonate) were used to stabilize the polymer dispersion.

Comparative polymer dispersion P11 (containing emulsifier, one stage)

Polymer dispersion P11 was prepared as described above and with the same monomers as polymer dispersion P2, with the difference that the total amounts of ethyl acrylate and acrylic acid were supplied together with the other monomers simultaneously in a single polymerization stage. The polymer dispersion was stabilized using an emulsifier (1.5 parts by weight of Maranil® A20 sodium n-C10-C30-alkylbenzenesulfonate).

Table 1: Monomer composition of the second polymerization stage

| Example | EA | MMA | S | nBA | AA | Tg [°C] |
|---------|------|-----|----|-----|-----|---------|
| P1 | 60 | | 12 | 8 | | -4 |
| P2 | 60 | 12 | | 8 | | -4 |
| P3 | 68 | 12 | | 5 | | 0 |
| P4 | 68 | | 12 | | | 0 |
| P5 | 63 | 17 | | | | 6 |
| P6 | 60 | 20 | | | | 9 |
| P7 | 60 | | 20 | | | 9 |
| P8 | 46 | 34 | | | | 21 |
| P9 | 39 | 41 | | | | 29 |
| P10 | 60 | 12 | | 8 | | -4 |
| P11 [1) ] | 77.5 | 12 | | 8 | 2.5 | -4 |

[1) ] polymerized in a single stage
EA: ethyl acrylate; MMA: methyl methacrylate; S: styrene; nBA: n-butyl acrylate;
AA: acrylic acid
Tg: calculated glass transition temperature for a polymer comprising the monomers of the second stage

Production of composite films:

The neutralized polymer dispersions are knife-coated in a dry film thickness of 2 g/m$^2$ (based on the solids content) onto commercial films (OPP-ink; printed oriented polypropylene). After hot-air drying, the films thus coated are rolled up with a second film (metalized CPP) and then compressed under a pressure of 6.5 bar and at 70°C in a roller press at 5 m/min. The composite films are subsequently stored for 1 day at room temperature under standard conditions.

Determination of peel strength (instantaneous adhesion and heat stability):

For the determination of the peel strength, the composite films are cut up into strips 15 mm wide. The strips are then peeled at an angle of 180° and at a speed of 100 mm/min at 23°C in a universal testing machine for peel strengths, from Zwick (model 1120.25.01), and the force required to achieve this is recorded, in newtons. To determine the instantaneous adhesion, the peel strength was recorded after 1 minute at 23°C. To determine the heat stability, the peel strength was recorded at 90°C. The results are compiled in Table 2.

Table 2: Test results, peel strength

| Example | Instantaneous adhesion [N/15 mm] | Heat stability at 90°C [N/15 mm] |
|---------|----------------------------------|----------------------------------|
| P1 | 0.7 | 0.6 |
| P2 | 0.8 | 0.6 |
| P3 | 0.9 | 0.6 |
| P4 | 1.0 | 0.7 |
| P5 | 1.0 | 0.8 |
| P6 | 0.6 | 1.1 |
| P7 | 0.6 | 0.8 |
| P8 | 0.05 | 1.1 |
| P9 | 0.05 | 1.2 |
| P10 | 0.1 | 0.5 |
| P11 | 0.2 | 0.4 |

The desire is for systems where, preferably, both values, for instantaneous adhesion and for heat stability, are above 0.5 N/15 mm. For the inventive examples P1-P7, this is the case. For the noninventive examples P8-P11, this is not the case.

Comparative polymer dispersions prepared in emulsifier-free form as described above, with the difference that the total amounts of ethyl acrylate and acrylic acid were supplied together with the other monomers at the same time in a single polymerization stage, i.e., without formation of protective colloid in situ, will result in dispersions with a high coagulum content.

**Claims**

1.    A process for preparing an aqueous polymer dispersion,

- where initially in a first stage in aqueous medium a first polymer dispersed in water is prepared by free-radical emulsion polymerization, the first polymer being prepared from a first composition comprising ethylenically unsaturated, free-radically polymerizable monomers, and where
- subsequently in a second stage a polymer dispersion is prepared in aqueous medium and in the presence of the first polymer by free-radical emulsion polymerization of a second composition, which is different from the first composition and comprises ethylenically unsaturated, free-radically polymerizable monomers,
- where the monomers of the first stage comprise at least one monomer having at least one acid group, in an amount of at least 0.1 part by weight, based on the total amount of monomers of the first and second stages, and
- where the polymerization of the first stage takes place at an pH less than 5 and, during the polymerization of the second stage, the acid groups of the first polymer are neutralized to an extent such that the pH of the polymer dispersion at the end of the second stage is greater than 5, a total of less than 0.5% by weight, based on solids content of the polymer dispersion or no emulsifier is used.

2.    The process according to the preceding claim, wherein, in the first stage, monomers containing acid groups are copolymerized with monomers without acid groups, the weight ratio of monomers containing acid groups to monomers without acid groups being in the range from 5:95 to 15:85.

3. The process according to any of the preceding claims, wherein the monomers with at least one acid group that are used in the first stage are selected from the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, and mixtures of these monomers; and the monomers without acid group that are used in the first stage are selected from the group consisting of C1 to C10 alkyl acrylates and C1 to C10 alkyl methacrylates, and mixtures of these monomers.

4. The process according to any of the preceding claims, wherein at least 60% by weight of the monomers used in the second stage are selected from the group consisting of C1 to C20 alkyl acrylates, C1 to C20 alkyl methacrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers.

5. The process according to any of the preceding claims, wherein the monomer with at least one acid group that is used in the first stage is acrylic acid;
and wherein the monomer without an acid group that is used in the first stage is ethyl acrylate;
and wherein at least 80% by weight of the monomers used in the second stage are selected from the group consisting of C1 to C10 alkyl acrylates, C1 to C10 alkyl methacrylates, styrene, and a mixture thereof.

6. The process according to any of the preceding claims, wherein the glass transition temperature calculated for a polymer prepared from the monomers of the second stage is in the range from -19°C to +15°C.

7. The process according to any of the preceding claims, wherein the glass transition temperature for the polymer prepared is in the range from -15°C to +15°C.

8. The process according to any of the preceding claims, wherein a molecular weight regulator is used in the polymerization of the first stage.

9. The process according to any of the preceding claims, wherein the weight ratio of the amount of the monomers used in the first stage to the amount of the monomers used in the second stage is from 5:95 to 50:50.

10. The process according to any of the preceding claims, wherein the polymerization of the first stage takes place in the presence of a seed latex.

11. The process according to any of the preceding claims, wherein the neutralization of acid groups of the first polymer takes place by feed addition of a neutralizing agent during the polymerization of the second stage.

12. The process according to any of the preceding claims, wherein the monomers used in the second stage comprise less than 5% by weight or no monomers with acid groups.

13. An aqueous polymer dispersion prepared by the process according to any of the preceding claims.

14. The use of the aqueous polymer dispersion according to the preceding claim for producing composite films.

15. A composite film which comprises a first film and at least one second film, which are bonded to one another using an adhesive comprising the aqueous polymer dispersion according to claim 13.

16. A process for producing composite films, which comprises providing an aqueous polymer dispersion according to claim 13 and bonding at least two films with one another using the aqueous polymer dispersion.

**Patentansprüche**

1. Verfahren zur Herstellung einer wässrigen Polymerdispersion,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, und wobei

- anschließend in einer zweiten Stufe eine Polymerdispersion in wässrigem Medium und in Gegenwart des ersten Polymerisats durch radikalische Emulsionspolymerisation einer von der ersten Zusammensetzung verschiedenen zweiten Zusammensetzung, enthaltend ethylenisch ungesättigte, radikalisch polymerisierbare Monomere, hergestellt wird,

- wobei die Monomere der ersten Stufe mindestens ein Monomer mit mindestens einer Säuregruppe in einer Menge von mindestens 0,1 Gew.-Teilen, bezogen auf die Gesamtmenge an Monomeren der ersten und zweiten Stufe, umfassen, und

- wobei die Polymerisation der ersten Stufe bei einem pH-Wert kleiner 5 erfolgt und während der Polymerisation der zweiten Stufe die Säuregruppen des ersten Polymerisats soweit neutralisiert werden, dass der pH-Wert der Polymerdispersion am Ende der zweiten Stufe größer 5 beträgt, wobei insgesamt weniger als 0,5 Gew.%, bezogen auf Feststoffgehalt der Polymerdispersion, oder kein Emulgator verwendet wird.

2. Verfahren nach dem vorhergehenden Anspruch, wobei in der ersten Stufe Säuregruppen aufweisende Monomere mit Monomeren ohne Säuregruppen copolymerisiert werden, wobei das Gewichtsverhältnis von Säuregruppen aufweisenden Monomeren zu Monomeren ohne Säuregruppen im Bereich von 5:95 bis 15:85 liegt.

3. Verfahren nach einem der vorhergehenden Ansprüche, wobei die in der ersten Stufe eingesetzten Monomere mit mindestens einer Säuregruppe ausgewählt sind aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat und Mischungen dieser Monomere; und die in der ersten Stufe eingesetzten Monomere ohne Säuregruppe ausgewählt sind aus der Gruppe bestehend aus C1- bis C10-Alkylacrylaten und C1- bis C10-Alkylmethacrylaten und Mischungen dieser Monomere.

4. Verfahren nach einem der vorhergehenden Ansprüche, wobei mindestens 60 Gew.% der in der zweiten Stufe eingesetzten Monomere ausgewählt sind aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomere.

5. Verfahren nach einem der vorhergehenden Ansprüche, wobei das in der ersten Stufe eingesetzte Monomer mit mindestens einer Säuregruppe Acrylsäure ist;
und wobei das in der ersten Stufe eingesetzte Monomer ohne Säuregruppe Ethylacrylat ist;
und wobei mindestens 80 Gew.% der in der zweiten Stufe eingesetzten Monomere ausgewählt sind aus der Gruppe bestehend aus C1- bis C10-Alkylacrylaten, C1- bis C10-Alkylmethacrylaten, Styrol und deren Gemisch.

6. Verfahren nach einem der vorhergehenden Ansprüche, wobei die für ein aus den Monomeren der zweiten Stufe hergestelltes Polymerisat berechnete Glasübergangstemperatur im Bereich von -19°C bis +15°C liegt.

7. Verfahren nach einem der vorhergehenden Ansprüche, wobei die Glasübergangstemperatur für das hergestellte Polymerisat im Bereich von -15°C bis +15°C liegt.

8. Verfahren nach einem der vorhergehenden Ansprüche, wobei bei der Polymerisation der ersten Stufe ein Molekulargewichtsregler eingesetzt wird.

9. Verfahren nach einem der vorhergehenden Ansprüche, wobei das Gewichtsverhältnis der Menge der in der ersten Stufe eingesetzten Monomere zur Menge der in der zweiten Stufe eingesetzten Monomere von 5:95 bis 50:50 beträgt.

10. Verfahren nach einem der vorhergehenden Ansprüche, wobei die Polymerisation der ersten Stufe in Gegenwart eines Saatlatex erfolgt.

11. Verfahren nach einem der vorhergehenden Ansprüche, wobei die Neutralisation von Säuregruppen des ersten Polymerisats durch Zulauf eines Neutralisationsmittels während der Polymerisation der zweiten Stufe erfolgt.

**12.** Verfahren nach einem der vorhergehenden Ansprüche, wobei die in der zweiten Stufe eingesetzten Monomere weniger als 5 Gew.-% oder keine Monomere mit Säuregruppen umfassen.

**13.** Wässrige Polymerdispersion, hergestellt nach dem Verfahren nach einem der vorhergehenden Ansprüche.

**14.** Verwendung der wässrigen Polymerdispersion nach dem vorhergehenden Anspruch zur Herstellung von Verbundfolien.

**15.** Verbundfolie, welche eine erste und mindestens eine zweite Folie aufweist, welche miteinander verklebt sind unter Verwendung eines Klebstoffs enthaltend die wässrige Polymerdispersion gemäß Anspruch 13.

**16.** Verfahren zur Herstellung von Verbundfolien, bei dem eine wässrige Polymerdispersion gemäß Anspruch 13 zur Verfügung gestellt wird und mindestens zwei Folien unter Verwendung der wässrigen Polymerdispersion miteinander verklebt werden.

**Revendications**

**1.** Procédé de préparation d'une dispersion aqueuse de polymère,

- où initialement dans une première étape dans un milieu aqueux, un premier polymère dispersé dans l'eau est préparé par polymérisation en émulsion radicalaire, le premier polymère étant préparé à partir d'une première composition comprenant des monomères polymérisables par voie radicalaire, à insaturation éthylénique, et où
- ensuite, dans une deuxième étape, une dispersion de polymère est préparée dans un milieu aqueux et en présence du premier polymère par polymérisation en émulsion radicalaire d'une deuxième composition, qui est différente de la première composition et comprend des monomères polymérisables par voie radicalaire, à insaturation éthylénique,
- où les monomères de la première étape comprennent au moins un monomère ayant au moins un groupe acide, en une quantité d'au moins 0,1 partie en poids, sur la base de la quantité totale de monomères des première et deuxième étapes, et
- où la polymérisation de la première étape est conduite à un pH inférieur à 5 et, pendant la polymérisation de la deuxième étape, les groupes acides du premier polymère sont neutralisés à un degré tel que le pH de la dispersion de polymère à la fin de la deuxième étape est supérieur à 5, un total inférieur à 0,5 % en poids, sur la base de la teneur en matières solides de la dispersion de polymère ou aucun émulsifiant n'est utilisé.

**2.** Procédé selon l'une quelconque des revendications précédentes, dans lequel, dans la première étape, les monomères contenant des groupes acides sont copolymérisés avec des monomères sans groupes acides, le rapport en poids des monomères contenant des groupes acides aux monomères sans groupes acides étant dans la plage de 5:95 à 15:85.

**3.** Procédé selon l'une quelconque des revendications précédentes, dans lequel les monomères avec au moins un groupe acide qui sont utilisés dans la première étape sont choisis dans le groupe constitué de l'acide acrylique, l'acide méthacrylique, l'acide itaconique, l'acide maléique, l'acide fumarique, l'acide crotonique, l'acide vinylacétique, l'acide vinyl-lactique, l'acide vinylsulfonique, l'acide styrènesulfonique, l'acide acrylamidométhylpropanesulfonique, l'acrylate de sulfopropyle, le méthacrylate de sulfopropyle, et des mélanges de ces monomères ; et les monomères sans groupe acide qui sont utilisés dans la première étape sont choisis dans le groupe constitué d'acrylates d'alkyle en C1 à C10 et de méthacrylates d'alkyle en C1 à C10, et des mélanges de ces monomères.

**4.** Procédé selon l'une quelconque des revendications précédentes, dans lequel au moins 60 % en poids des monomères utilisés dans la deuxième étape sont choisis dans le groupe constitué d'acrylates d'alkyle en C1 à C20, méthacrylates d'alkyle en C1 à C20, esters vinyliques d'acides carboxyliques comprenant jusqu'à 20 atomes C, vinylaromatiques ayant jusqu'à 20 atomes C, nitriles à insaturation éthylénique, halogénures de vinyle, éthers vinyliques d'alcools comprenant 1 à 10 atomes C, hydrocarbures aliphatiques ayant 2 à 8 atomes C et une ou deux doubles liaisons, et des mélanges de ces monomères.

**5.** Procédé selon l'une quelconque des revendications précédentes, dans lequel le monomère avec au moins un groupe acide qui est utilisé dans la première étape est l'acide acrylique ;
et dans lequel le monomère sans groupe acide qui est utilisé dans la première étape est l'acrylate d'éthyle ;

et dans lequel au moins 80 % en poids des monomères utilisés dans la deuxième étape sont choisis dans le groupe constitué d'acrylates d'alkyle en C1 à C10, de méthacrylates d'alkyle en C1 à C10, de styrène, et d'un mélange de ceux-ci.

6. Procédé selon l'une quelconque des revendications précédentes, dans lequel la température de transition vitreuse calculée pour un polymère préparé à partir des monomères de la deuxième étape est dans la plage de -19 °C à +15 °C.

7. Procédé selon l'une quelconque des revendications précédentes, dans lequel la température de transition vitreuse pour le polymère préparé est dans la plage de -15 °C to +15 °C.

8. Procédé selon l'une quelconque des revendications précédentes, dans lequel un régulateur de poids moléculaire est utilisé dans la polymérisation de la première étape.

9. Procédé selon l'une quelconque des revendications précédentes, dans lequel le rapport en poids de la quantité des monomères utilisée dans la première étape à la quantité des monomères utilisés dans la deuxième étape est de 5:95 à 50:50.

10. Procédé selon l'une quelconque des revendications précédentes, dans lequel la polymérisation de la première étape est conduite en présence d'un germe de latex.

11. Procédé selon l'une quelconque des revendications précédentes, dans lequel la neutralisation de groupes acides du premier polymère est conduite par ajout par alimentation d'un agent neutralisant pendant la polymérisation de la deuxième étape.

12. Procédé selon l'une quelconque des revendications précédentes, dans lequel les monomères utilisés dans la deuxième étape comprennent moins de 5 % en poids ou sont exempts de monomères avec des groupes acides.

13. Dispersion aqueuse de polymère préparée par le procédé selon l'une quelconque des revendications précédentes.

14. Utilisation de la dispersion aqueuse de polymère selon la revendication précédente pour produire des films composites.

15. Film composite qui comprend un premier film et au moins un deuxième film, qui sont fixés l'un à l'autre au moyen d'un adhésif comprenant la dispersion aqueuse de polymère selon la revendication 13.

16. Procédé de production de films composites, qui comprend la fourniture d'une dispersion aqueuse de polymère selon la revendication 13 et la fixation d'au moins deux films l'un à l'autre au moyen de la dispersion aqueuse de polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4325856 A
- EP 0338486 A
- EP 1479699 A
- WO 9823656 A
- WO 0050480 A
- EP 81083 A

### Non-patent literature cited in the description

- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- **W. MÄCHTLE.** *Makromolekulare Chemie,* 1984, vol. 185, 1025-1039